# EUROPEAN PATENT APPLICATION

(11) **EP 4 755 675 A1**
(43) Date of publication of application: **10.06.2026**
(21) Application number: 25220066.2
(22) Date of filing: 02.12.2025
(51) Int. Cl.: B60H 1/32, B60H 1/00

(54) **MOTOR VEHICLE**

(30) Priority: 03.12.2024 IT 202400027312
(71) Applicant: FERRARI S.p.A., 41100 Modena (IT)
(72) Inventor: FAVARETTO, Fabrizio, 41100 Modena (IT)
(74) Representative: Studio Torta S.p.A.

(57) **Abstract**

Motor vehicle comprising a body defining a passenger compartment, a first axle located, in use, at the front relative to a first longitudinal axis (X) of the motor vehicle, and a second axle located, in use, at the back relative to the first axle with reference to the first longitudinal axis (X), the first axle and second axle comprise first wheels and second wheels, respectively, and an air conditioning system which can be operated to adjust the temperature inside the passenger compartment, the body comprises a fixing structure (80) located behind the passenger compartment, the fixing structure (80) is hollow and has a width, measured parallel to a second axis (Y) progressively decreasing from the first axle to the second axle parallel to the first longitudinal axis (X), the air conditioning system comprises, in turn, a heat exchanger (24) housed inside the fixing structure (80), the heat exchanger (24) has a width, measured parallel to the second axis (Y) progressively decreasing from the first axle to the second axle parallel to the first longitudinal axis (X).

## Description

### CROSS-REFERENCE TO RELATED APPLICATIONS

This patent application claims priority from Italian patent application no. 102024000027312 filed on December 3, 2024, the entire disclosure of which is incorporated herein by reference.

### TECHNICAL FIELD

The present invention relates to a motor vehicle, in particular a motor vehicle of the electric type.

### BACKGROUND

The motor vehicles of the electric type comprise, in a known manner:
- a frame;
- a front axle comprising a pair of front wheels;
- a rear axle comprising a pair of rear wheels; and
- a powertrain comprising at least one electric machine operating as an electric motor and operatively connected to the front and/or rear wheels for transmitting a driving torque to the front and/or rear wheels themselves.

The motor vehicles also comprise, in a known manner, an air conditioning system.

The air conditioning system is adapted to extract or introduce heat into the passenger compartment, so as to maintain a desired temperature value inside the passenger compartment itself, with temperatures in the environment outside the motor vehicle varying for example between -30 °C and 50 °C.

This extraction or introduction of heat takes place respectively through the delivery inside the passenger compartment of "cold" air or "hot" air at respective temperatures that are lower or higher than that existing in the passenger compartment itself.

According to a commonly used solution, the air conditioning system produces "cold" air to be sent into the passenger compartment through a vapour compression refrigeration cycle also known as the "Vapour cycle", in which a cooling fluid different from air undergoes a sequence of thermodynamic transformations. In particular, the cooling fluid, for example R134a, undergoes a liquid-vapor phase change during the vapour compression cycle and must, therefore, be able to evaporate at low temperatures of the order of a few tens of degrees below 0 °C and at pressures above atmospheric pressure, and to condense at temperatures of the order of 50-115 °C at not too high pressures.

In this known solution, the air conditioning system comprises:
- a first closed circuit, through which the cooling fluid flow and along which the vapour compression cycle is carried out; and
- a second circuit fluidly connected to the motor vehicle and capable of being flown by the recirculated air to and from the passenger compartment itself.

In greater detail, the first circuit comprises, in sequence:
- a compressor, which compresses the cooling fluid in the vapour phase;
- a condenser, which determines the transition of the cooling fluid from the vapour phase to the liquid phase;
- a lamination valve, which determines the transition of the cooling fluid to a two-phase condition formed by a mixture of vapour liquid; and
- an evaporator, which determines the transition of the cooling fluid from the two-phase condition to a vapour phase.

In particular, the cooling fluid absorbs heat from the outside inside the evaporator and releases it to the outside inside the condenser.

The second circuit comprises an inlet and a plurality of outlet vents fluidly connected to the passenger compartment and a fan to create a circulation of air from the inlet to the outlet.

The evaporator is interposed along the second circuit in a position interposed between the inlet and the outlet vents.

In this way, the evaporator removes heat from the hot air coming from the inlet of the second circuit. Consequently, the cooled air reaches the outlet vents of the second circuit and the passenger compartment of the motor vehicle.

In the solutions of known type, the second circuit is housed inside an engine compartment of the motor vehicle, i.e. near the passenger compartment.

Recent anti-pollution regulations limit the use of the cooling fluid R134a.

As an alternative to the cooling fluid R134a, the use of propane has been proposed, as it allows the overall weight of the second circuit to be reduced.

However, due to the high flammability of propane, it is necessary to arrange the second circuit in a position further away from the passenger compartment.

This makes it necessary, on the one hand, to use liquid-liquid heat exchangers to exchange heat between the second circuit and a plurality of auxiliary ducts thermally coupled with the first circuit.

These heat exchangers commonly have a rectangular shape and, therefore, a certain footprint parallel to a transverse direction orthogonal to a normal travel direction of the motor vehicle.

On the other hand, the powertrain of the motor vehicles of the electric type also comprises one or more electric batteries adapted to supply the electric machine with the necessary amount of electric power.

The range of the electric vehicles is determined by the amount of electrical energy that can be stored per unit of volume.

At the current state of technology, this value is approximately one tenth of the amount of energy that can be stored per unit volume through the use of fossil fuel.

This places limitations on the performance of the electric type motor vehicles, especially when used for sports use on the track or in competitions.

In fact, as is known, in curves, motor vehicles counteract the centrifugal force by means of the friction of the tyres against the ground in a radial direction relative to the arc of the curve described.

Consequently, for a given radius of the curve, the square of the maximum travelling speed of a motor vehicle under grip conditions is proportional to the vertical load acting on the tyres.

In order to increase this load to values higher than the weight of the motor vehicle, it is known to provide motor vehicles with downforce aerodynamic surfaces, i.e. shaped so as to generate an additional vertical downward thrust. This vertical downward thrust, known as "downforce", is proportional to the square of the motor vehicle's travel speed and to a downforce coefficient associated with the shape of the aerodynamic surface.

The increase in this downforce inevitably leads to an increase in the aerodynamic drag of the motor vehicle.

This is because the downforce coefficient of the aerodynamic surface is proportional to the drag coefficient.

Due to this increase in aerodynamic drag, the electric motors must deliver a greater electrical power to maintain the desired speed values on straight segments.

This increase in electrical power further penalises the range of the motor vehicle.

In order to increase the range of the motor vehicle and therefore allow satisfactory sports use, it is therefore desirable to reduce the aerodynamic drag of the motor vehicle as much as possible without penalising the overall load on the wheels.

In other words, it is desirable to reduce the overall drag coefficient of the motor vehicle without penalising the downforce coefficient of the aerodynamic surfaces.

As is known, this drag coefficient is determined in a relevant manner by the shape of a rear portion of the motor vehicle and by the dimension of this portion along the transverse direction.

The need is felt in the sector to realize heat exchangers for the air conditioning system of a motor vehicle, which do not excessively penalise the overall drag coefficient of the motor vehicle and at the same time allow the fixing of the rear suspension arms.

### SUMMARY

Aim of the present invention is the realization of a motor vehicle, which allows to satisfy at least one of the aforesaid needs.

The aforesaid aim is achieved by the present invention, as it relates to a motor vehicle as defined by claim 1.

### BRIEF DESCRIPTION OF THE DRAWINGS

For a better understanding of the present invention, a preferred embodiment is described below, by way of nonlimiting example and with reference to the accompanying drawings, wherein:
- Figure 1 is a perspective view of a motor vehicle comprising an axle realized according to the dictates of the present invention;
- Figure 2 is a perspective view on an enlarged scale of a rear portion of the motor vehicle of Figure 1 with parts removed for clarity;
- Figure 3 a partially exploded perspective view of the rear portion of the motor vehicle of Figure 2 according to a different visual angle and with parts removed for clarity;
- Figure 4 is a perspective view of a heat exchanger of an air conditioning system of the motor vehicle of Figures 1 to 3; and
- Figure 5 shows in schematic view the air conditioning system of Figure 4.

### DESCRIPTION OF EMBODIMENTS

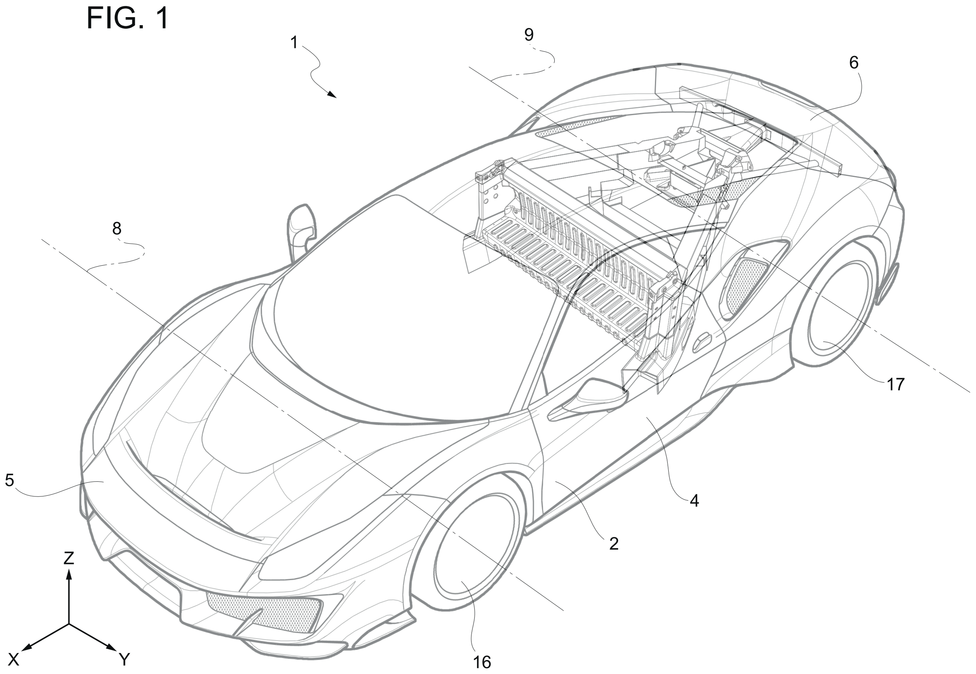

With reference to Figure 1, 1 denotes a motor vehicle.

In greater detail, the motor vehicle 1 comprises:
- a body 2 delimiting a passenger compartment 3; and
- a pair of doors 4 hinged to the body 2.

The body 2 further comprises a front 5 and a rear 6.

It is also possible to define:
- a longitudinal axis X integral with the motor vehicle 1, arranged, in use, horizontal and parallel to a normal travel direction of the motor vehicle 1;
- a transverse axis Y integral with the motor vehicle 1, arranged, in use, horizontal and orthogonal to the axis X; and
- an axis Z integral with the motor vehicle 1 arranged, in use, vertical and orthogonal to the axes X, Y.

It should be noted that in the remainder of this description, expressions such as "above", "below", "front", "rear" and the like are used with reference to conditions of normal travel of the motor vehicle 1, wherein the latter travels parallel to the axis.

The motor vehicle 1 also comprises, with reference to the normal travel direction parallel to the axis X and only schematically shown in Figure 1:
- a front axle 8 comprising a pair of front wheels 16; and
- a rear axle 9 comprising a pair of rear wheels 17.

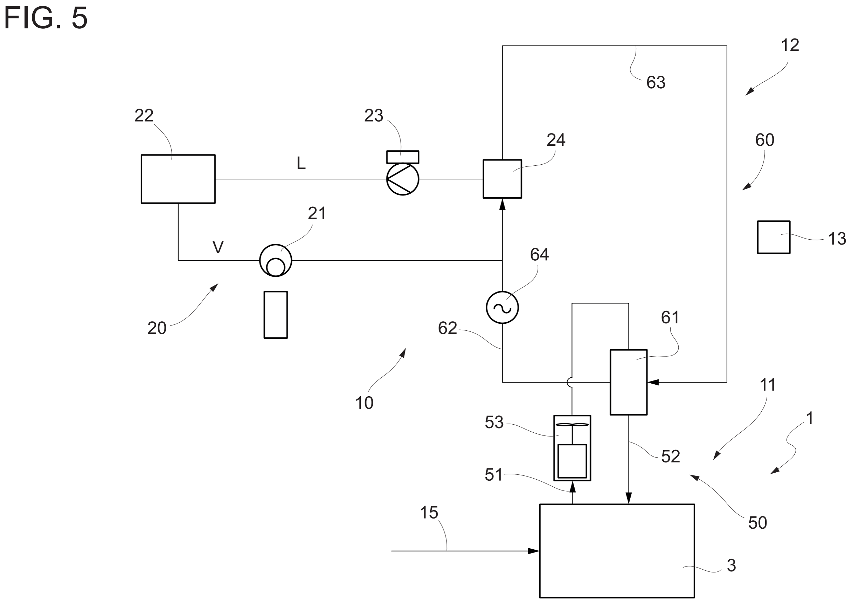

The motor vehicle 1 also comprises an air conditioning system 10 (only schematically shown in Figure 5), which is designed to adjust the temperature inside the passenger compartment 3, i.e. to maintain said temperature in a certain range of values.

More precisely, the system 10 comprises, as schematically shown in Figure 1:
- a group 11 for the delivery of "hot" air, i.e. at a temperature higher than the temperature inside the passenger compartment 3;
- a group 12 for the delivery of "cold" air, i.e. at a temperature lower than the temperature inside the passenger compartment 3; and
- a control unit 13 (only schematically shown) programmed to control the groups 11, 12 on the basis of thermal factors external to the convertiplane 1 and the desired temperature range to be reached inside the passenger compartment 3.

In greater detail, the group 11 is shown limited to a duct 15 for introducing the hot air into the passenger compartment 3.

In some embodiments, the group 12 could have some elements in common or thermally coupled with the group 11.

Without loss of generality, the group 12 is described below without reference to any mechanical or thermal coupling with the group 11.

The group 12 comprises (Figure 5):
- a circuit 20 closed and capable of being flown by a cooling fluid; and
- an air circulation circuit 50 fluidly connected to the passenger compartment 3.

In greater detail, the cooling fluid performs within the circuit 20 a thermodynamic cycle known as a vapour compression cycle.

During such a cycle, the cooling fluid flows within a duct 25 and undergoes a phase transition from liquid L to vapour V and vice versa.

The circuit 20 comprises, in sequence:
- a compressor 21, which is driven by an electric motor, compresses the cooling fluid in the vapour phase V;
- a condenser 22, which determines the transition of the cooling fluid from the vapour phase V to the liquid phase L;
- a lamination valve 23, which determines the transition of the cooling fluid to a two-phase condition formed by a mixture L+V of liquid L and vapour V; and
- an evaporator defined by a heat exchanger 24, which determines the transition of the cooling fluid from the two-phase condition L+V to the vapour phase V.

In particular, the cooling fluid absorbs heat from the outside inside the heat exchanger 24 and releases it to the outside inside the condenser 22.

The circuit 50 is open and comprises, in turn:
- an inlet 51 fluidly connected to the passenger compartment 3;
- a plurality of outlet vents 52 fluidly connected to the passenger compartment 3; and
- a fan 53 for creating an air circulation from the inlet 51 to the outlet vents 52.

As described in more detail below in the present description, the circuit 50 is thermally indirect with the circuit 20.

Advantageously, the rear 6 of the body 2 comprises a hollow fixing structure 80 and having a width, measured parallel to the axis Y progressively decreasing from the axle 8 to the axle 9; the heat exchanger 24 is housed inside the fixing structure 80; the heat exchanger 24 has a progressively decreasing width from the axle 8 towards the axle 9 parallel to the axis X.

In greater detail, the heat exchanger 24 has a triangular shape in a plan view along the axis Z.

The heat exchanger 24 is also symmetrical relative to a median plane of the motor vehicle 1 orthogonal to the axis Y.

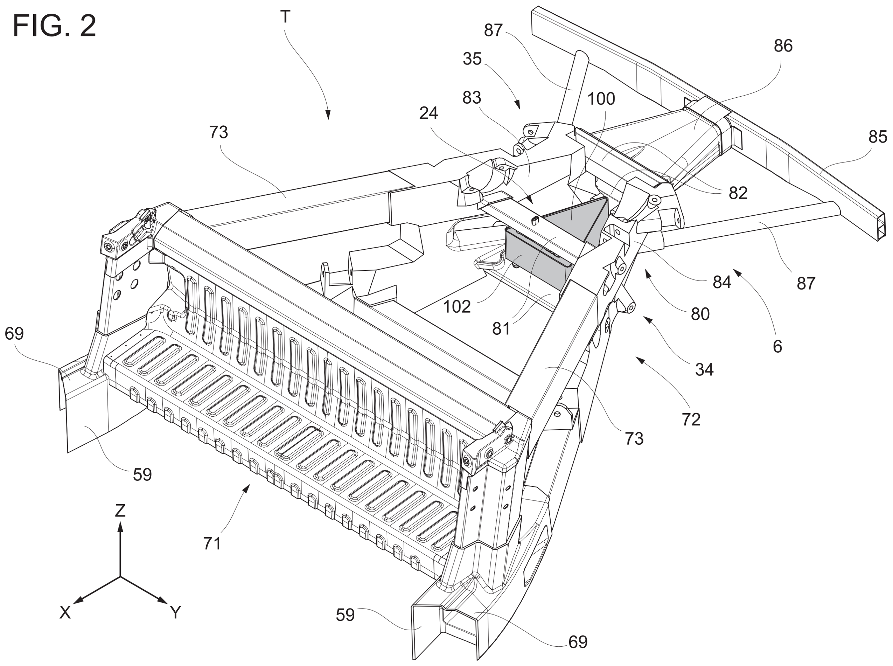

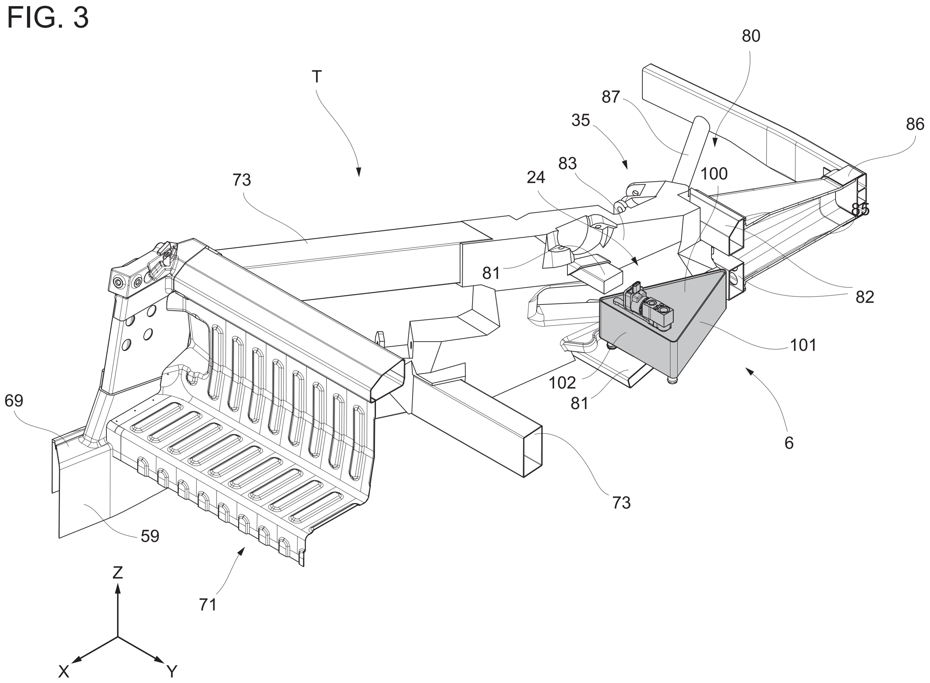

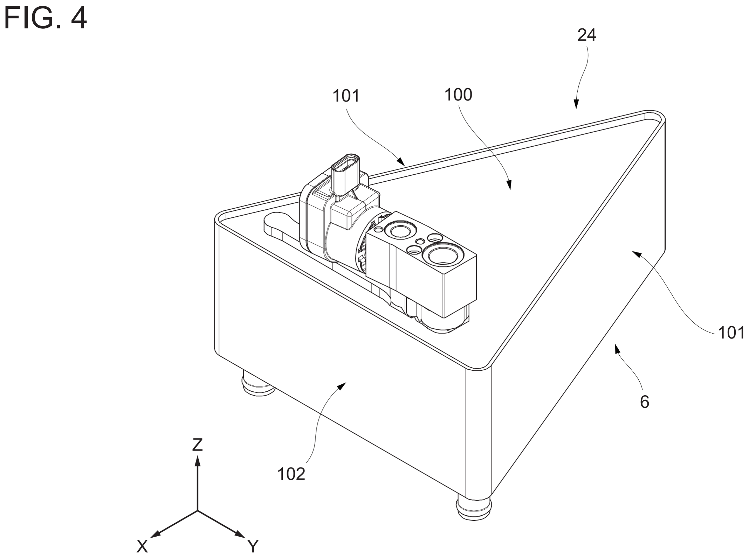

In particular, the heat exchanger 24 comprises (Figures 2 to 4):
- a pair of triangular faces 100, opposite one another along the axis Z and lying on respective planes orthogonal to the axis Z itself;
- a pair of rectangular faces 101, opposite one another and converging from the axle 8 towards the axle 9 parallel to the axis Y, extending between the faces 100, and lying on respective planes orthogonal to the faces 100 themselves;
- a rectangular face 102, extending between the faces 100 and the faces 101, lying on a respective plane orthogonal to the axis X, and delimiting the heat exchanger 24 on the side of the axle 8.

The heat exchanger 24 is, in particular, a liquid-liquid exchanger.

The heat exchanger 24 further comprises:
- a first inlet mouth and a first outlet mouth (not shown) capable of being flown by a first liquid respectively at a first temperature value and at a second temperature value greater than the first temperature value; and
- a second inlet mouth and a second outlet mouth (not shown) capable of being flown by a second liquid respectively at a third temperature value and at a fourth temperature value lower than the third temperature value.

The group 12 further comprises (Figure 5) a further circuit 60 capable of being flown by a heat transfer fluid and thermally coupled with the circuits 20, 50, and the heat exchanger 24 is interposed along the circuit 20.

In the case shown, the heat transfer fluid is a mixture of water and glycol.

In greater detail, the group 12 further comprises a heat exchanger 61 interposed along the circuit 60 and along the circuit 50 between the inlet 51 and the vents 52.

The circuit 60 comprises, in particular:
- a portion 62 interposed between the heat exchanger 24 and the exchanger 61; and
- a portion 63 interposed between the exchanger 61 and the heat exchanger 24; and
- a pump 64 which can be operated to determine the flowing of the heat transfer fluid along the circuit 60.

In the case shown, the exchanger 61 is an air-water exchanger of known type.

The heat transfer fluid flows into the portion 62 at a first temperature greater than a second temperature with which it flows into the portion 63.

More in particular, the heat transfer fluid flowing in the portion 62 of the circuit 60 releases heat to the heat exchanger 24 being cooled from the first temperature to the second temperature.

The heat transfer fluid flowing in the portion 63 absorbs heat in the exchanger 61, being heated from the second temperature to the first temperature and cooling the air stream flowing from the inlet 51 towards the outlet vents 52.

The cooling fluid is in the case shown propane.

In particular, within the heat exchanger 24, the mixture of water and glycol flowing in the circuit 60 is cooled from the first temperature to the second temperature and the propane flowing in the circuit 20 is heated from the third to the fourth temperature.

The front 5 of the body 2 is shown in Figure 2 limited to a pair of spars 69 elongated parallel to the axis X.

The rear 6 comprises, proceeding parallel to the axis X from the axle 8 to the axle 9:
- a cross member 71 parallel to the axis Y;
   - a tapered portion 72 having a width, measured parallel to the axis Y progressively decreasing from the axle 8 to the axle 9, and defining a pair of surfaces 73 opposite one another relative to the axis X; and
   - the fixing structure 80 housing the compressor 21, the condenser 22, the lamination valve 23 and the evaporator 24.

The cross member 71 extends between the rear ends 59 of respective spars 69.

The surfaces 73 are, in this case, flat and lie on planes parallel to the axis Z and transverse to the axes X, Y.

The fixing structure 80 comprises, in turn:
- a pair of front cross members 81 and a pair of rear cross members 82; and
- a pair of lateral sides 83, 84 extending between the cross members 81, 82.

The cross members 81, 82 extend parallel to the axis Y and are spaced apart from one another parallel to the axis Z.

The cross members 82 have a lower extension than the cross members 81 parallel to the axis Y.

The sides 83, 84 extend symmetrically to one another relative to the axis Y.

The cross member 71, the surfaces 73 and the sides 83, 84, and the cross members 82 define, in plan view, i.e. in projection on a plane orthogonal to the axis Z, an isosceles trapezium T which is symmetric relative to the axis X.

More in particular, the projections on the plane orthogonal to the axis Z of the cross member 71 and of the cross members 82 define respectively the larger base and the smaller base of the isosceles trapezium T, and the projection on the plane orthogonal to the axis Z of the surfaces 73 and of the sides 83, 84 define the oblique sides of the aforesaid isosceles trapezium T.

The extension of the cross member 71 along the axis Y is, therefore, greater than the extension of the cross members 81 along the axis Y itself.

The rear 6 further comprises:
- a rear end cross member 85, having a development mainly parallel to the axis Y and arranged spaced along the axis X from the cross members 82;
- a bracket 86 parallel to the axis X and interposed between the cross member 85 and the cross members 82; and
- a pair of brackets 87 interposed between the cross member 85 and the cross members 82 symmetrically to the axis X, converging with one another from the cross member 85 towards the cross members 82.

The bracket 86 is interposed between the brackets 87 parallel to the axis Y.

The motor vehicle 1 further comprises a pair of rear suspensions 34, 35 of known type and configured to elastically suspend the respective rear wheels 17 to the body 2.

Each rear suspension 34, 35 is articulated to the fixing structure 80 and is shown in Figure 2 limited to the relative attachment joints to the fixing structure 80 itself.

The operation of the system 10 is described below limited to the operation of the group 12 for the delivery of "cold air" inside the passenger compartment 3.

In greater detail, the fan 53 of the circuit 50 creates a continuous circulation of air from the inlet 51 to the outlet vents 52 through the heat exchanger 24 of the circuit 20 and the passenger compartment 3 of the motor vehicle 1.

The heat transfer fluid circulates at the first temperature value in the portion 62 of the circuit 60 and at the second temperature value in the portion 63 of the circuit 60.

The cooling fluid describes a vapour compression cycle within circuit 20, during which it undergoes the following thermodynamic transformations:
- is compressed in the vapour phase V inside the compressor 21;
- undergoes a transition from the vapour phase V to the liquid phase L within the condenser 22;
- is laminated so as to undergo a transition to a two-phase condition L+V in which it is a mixture of liquid L and vapour V; and
- evaporates, undergoing a transition from the two-phase condition L+V to the vapour phase V.

In greater detail, the cooling fluid, in particular propane, releases heat at the condenser 22 and absorbs heat from the air circulating in the circuit 50 at the heat exchanger 24 defining the evaporator of the circuit 20.

This heat absorption determines the cooling of the heat transfer fluid, in particular the mixture of water and glycol, circulating in the portion 62 of the circuit 60 from the first temperature value to the second temperature value.

The heat transfer fluid circulating in the portion 62 absorbs the stream of "hot" air in the exchanger 61. Consequently, the stream of air releases heat and reaches the "cold" outlet vents 52 and the heat transfer fluid absorbs heat, returning to the first temperature value along the portion 61 of the circuit 60.

From an examination of the motor vehicle 1 realized according to the present invention, the advantages that it allows obtaining are evident.

In particular, the exchanger 24 and the hollow fixing structure 80 that houses it both have a width, measured parallel to the axis Y progressively decreasing from the axle 8 to the axle 9 parallel to the axis X.

This makes it possible to reduce the overall dimensions of the motor vehicle 1 parallel to the axis Y in the region of the axle 15, i.e. at the rear 6 of the body 2.

This reduction in the overall dimensions allows to shape the body 2 - in particular the rear 6 - according to a more aerodynamic shape than the known solutions and indicated in the introductory part of the present description.

It is thus possible to reduce consumption and, therefore, increase the range of the motor vehicle 1 while preserving the ability of the motor vehicle 1 to travel curved trajectories at high speed.

In summary, the motor vehicle 1 is particularly performant and suitable for sports use.

The cross member 71, the tapered portion 72 and the cross members 81 of the fixing structure 80 define an outline shaped in plan like the isosceles trapezium T. This shape easily allows to absorb in part a rear impact directed against the cross member 85 and to accelerate the motor vehicle 1 as a result of this impact.

Moreover, the rear suspensions 34, 35 are articulated on the fixing structure 80.

It follows that the fixing structure 80 fully absorbs the loads from the rear wheels 17 and the rear suspensions 34, 35 to the body 2.

In this way, the fixing structure 80 performs by means of a single component both the functions of housing some components of the suspensions 34, 35 and that of housing the heat exchanger 24.

The brackets 87 inclined relative to the axis X are effective in reducing the elastic instability of the bracket 86 parallel to the axis X in the event of a rear impact against the cross member 85 inclined relative to the axis X itself.

Finally, it is clear that modifications and variants can be made to the motor vehicle 1 according to the present invention which, however, do not fall outside the scope of protection defined by the claims.

In particular, the faces 100 of the heat exchanger 24 could have a trapezoidal shape.

## Claims

1. - A motor vehicle (1) comprising:
- a body (2) defining a passenger compartment (3);
- a first axle (8) located, in use, at the front relative to a first longitudinal axis (X) of said motor vehicle (1); and
- a second axle (9) located, in use, at the back relative to said first axle (8) with reference to said first axis (X); said first axle (8) and said second axle (9) comprising first wheels (16) and second wheels (17), respectively; and
- an air conditioning system (10), which can be operated to adjust the temperature inside said passenger compartment (3);
**characterized in that** said body (2) comprises a hollow fixing structure (80) located behind said passenger compartment (3);
said fixing structure (80) having a width, measured parallel to a second axis (Y), progressively decreasing from said first axle (8) to said second axle (9) parallel to said first axis (X);
said air conditioning system (10) comprising, in turn, a heat exchanger (24) housed inside said fixing structure (80);
said heat exchanger (24) having a width, measured parallel to a second axis (Y), progressively decreasing from said first axle (8) to said second axle (9) parallel to said first axis (X).

2. **-** The motor vehicle according to claim 1, **characterized in that** said exchanger (24) has a triangular or trapezoidal shape in a plan view according to a third axis (Z) orthogonal to a plane defined by said first axis (X) and second axis (Y).

3. **-** The motor vehicle according to claim 2, **characterized in that** said exchanger (24) is symmetrical relative to a plane orthogonal to said second axis (Y) that is the middle plane of said motor vehicle (1).

4. **-** The motor vehicle according to any one of the preceding claims, **characterized in that** said exchanger (24) has a rectangular shape in a cross section made along a second plane orthogonal to said first axis (X).

5. **-** The motor vehicle according to any one of the preceding claims, **characterized in that** said heat exchanger (24) is a liquid-liquid heat exchanger.

6. **-** The motor vehicle according to claim 5, **characterized in that** said air conditioning system (10) comprises, in turn:
- a first circuit (20), through which a cooling fluid can flow and which comprises, in turn, said heat exchanger (24), which can be supplied with said cooling fluid and is designed to allow said cooling fluid to releaser heat;
- a second circuit (50) fluidly connected to said passenger compartment (3);
- a third circuit (60), through which a heat transfer liquid can flow and which is thermally coupled to said first and second circuits (20, 50);
said second circuit (50) comprising:
- an inlet (51), which can fluidly be connected to said passenger compartment (3) and can be supplied with a stream of air to be cooled; and
- at least one outlet (52), which can fluidly be connected to said passenger compartment (3) and through which said cooled air stream can flow;
said first circuit (20) being closed and capable of being flown through by a cooling fluid capable of changing phase and comprising, in sequence:
- compressor means (21), which can be supplied with said fluid in the vapour phase (V) and can be activated to raise the pressure of said cooling fluid in the vapour phase (V);
- a condenser (22), which is located downstream of said compressor means (21) with reference to the flowing direction of said cooling fluid in said first circuit (20), can be supplied with said cooling fluid in the vapour phase (V) and is designed to determine the transition of said cooling fluid from the vapour phase (V) to the liquid phase (L);
- lamination means (23), which are located downstream of said condenser (22) with reference to said flowing direction, can be supplied with said cooling fluid in the liquid phase (L) and are designed to determine the transition of said cooling fluid to a two-phase condition (L+V) formed by a mixture of a liquid phase (L) and a vapour phase (V); and
- an evaporator (24), which defines said first exchanger (24), is located downstream of said lamination means (23) and upstream of said compressor means (21) with reference to said flowing direction and is designed to determine the transition of said cooling fluid from said two-phase condition (L+V) to the vapour phase (V);
said compressor means (21), said condenser (22), said lamination means (23) and said evaporator (24) being housed inside said fixing structure (80);
said heat exchanger (24) being interposed along said third circuit (60), so as to cool said heat transfer liquid.

7. **-** The motor vehicle according to any one of the preceding claims, **characterized in that** said body (2) comprises, from said first axle (8) to said second axle (9):
- a first cross member (71), which is transverse to said first axis (X); and
- a tapered portion (72) having a width, measured parallel to a second axis (Y), progressively decreasing from said first axle (8) to said second axle (9) parallel to said first axis (X) and defining a pair of surfaces (73) opposite one another relative to said first axis (X); and
- said fixing structure (80).

8. **-** A motor vehicle according to any one of the preceding claims, **characterized in that** it further comprises:
- a first rear suspension (34) connecting a second wheel (17) and said body (2) in a movable manner; and
- a second rear suspension (35) connecting the other second wheel (17) and said body (2) in a movable manner;
said first and second suspensions (34, 35) being articulated on said fixing structure (80).

9. **-** The motor vehicle according to claim 7 or 8, **characterized in that** said first cross member (71), said tapered portion (72) and said fixing structure (80) have, in a view from the top parallel to a third axis (Z), which is orthogonal to said first and second axis (X, Y), an outline shaped like an isosceles trapezium (T), which is symmetric relative to said first axis (X).

10. **-** The motor vehicle according to any one of the preceding claims, **characterized in that** it comprises a second cross member (85) defining an end of said body (2) located at the back, with reference to a normal travel direction of said motor vehicle (1);
said second cross member (85) being connected to said fixing structure (80) by a pair of brackets (87) arranged symmetrically relative to said first axis (X) and inclined relative to said first axis (X).
